Europäisches Patentamt

European Patent Office

Office européen des brevets

(19)

(11) Veröffentlichungsnummer : **0 326 836 B1**

# (12) EUROPÄISCHE PATENTSCHRIFT

(45) Veröffentlichungstag der Patentschrift :
**11.12.91 Patentblatt 91/50**

(51) Int. Cl.⁵ : **A01D 41/14**

(21) Anmeldenummer : **89100634.8**

(22) Anmeldetag : **14.01.89**

(54) Mäh- und/oder Aufnahmevorsatz für einen Mähdrescher.

(30) Priorität : **03.02.88 DE 3803115**

(43) Veröffentlichungstag der Anmeldung :
**09.08.89 Patentblatt 89/32**

(45) Bekanntmachung des Hinweises auf die
Patenterteilung :
**11.12.91 Patentblatt 91/50**

(84) Benannte Vertragsstaaten :
**AT BE CH DE ES FR GB GR IT LI NL**

(56) Entgegenhaltungen :
**EP-A- 0 131 853**
**CA-A- 1 197 130**
**DE-A- 2 026 190**

(56) Entgegenhaltungen :
**DE-A- 3 605 933**
**DE-U- 6 603 729**
**FR-A- 1 455 702**
**FR-A- 1 544 272**
**US-A- 4 418 763**
**US-A- 4 453 601**

(73) Patentinhaber : **Kalverkamp, Klemens**
**Possenbrock 29**
**W-4730 Ahlen/Westfalen (DE)**

(72) Erfinder : **Kalverkamp, Klemens**
**Possenbrock 29**
**W-4730 Ahlen/Westfalen (DE)**

(74) Vertreter : **Habbel, Hans-Georg, Dipl.-Ing.**
**Postfach 3429 Am Kanonengraben 11**
**W-4400 Münster (DE)**

## Beschreibung

Die Erfindung bezieht sich auf einen Mäh- und/oder Aufnahmevorsatz für einen Mähdrescher gemäß dem Oberbegriff des Hauptanspruches.

Bei den heute bekannten Mähdreschern ist die Arbeitsbreite und damit die Breite des sogenannten Erntevorsatzes immer wesentlich größer als die Breite der eigentlichen Erntemaschine. Dies hat in der Praxis dazu geführt, daß die Erntevorsätze der Erntemaschine üblicherweise beim Transport, insbesondere beim Straßentransport, auf einem hinten an die Erntemaschine angehängten Transportwagen mitgeführt werden. Hierdurch wird ein zusätzlicher Spezialwagen erforderlich und die Länge des gesamten Zuges wird übermäßig groß.

Es ist daher bereits in der gattungsbildenden DE-U-6603729 vorgeschlagen worden, den Erntevorsatz aus zwei Vorsatzteilen zu bilden, die beweglich vom Mähdrescher getragen werden, und zwar wird dabei jedes Vorsatzteil um eine in Fahrtrichtung des Mähdreschers weisende Achse geschwenkt. Die bekannte Einrichtung ist ebenso wie die Einrichtung gemäß der DE-A-3605933 relativ kompliziert und bereitet bezüglich der erforderlichen Antriebsmittel zum Übertragen des Antriebes vom Mähdrescher auf den Erntevorsatz Schwierigkeiten. Außerdem behindern die vertikal ausgerichteten Vorsatzteile die Sicht für den Fahrer.

Der Erfindung liegt die Aufgabe zugrunde, die gattungsbildende Einrichtung dahingehend zu verbessern, daß ein möglichst breiter Erntevorsatz auf die übliche Mähdrescherbreite beim Straßentransport reduziert werden kann, dabei aber das Gesichtsfeld des Fahrers nicht eingeschränkt wird und der Antrieb des Erntevorsatzes während des Ernteeinsatzes vom Mähdrescher aus problemlos durchgeführt werden kann.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird gemäß der Erfindung vorgeschlagen, daß nur ein Vorsatzteil um eine in Fahrtrichtung weisende Achse schwenkbar ist, wobei aber dieses sogenannte zweite Vorsatzteil schwenkbar an dem anderen, ersten Vorsatzteil gelagert und über dieses legbar ist und es können beide Vorsatzteile quer zur Längsachse der Erntemaschine, d.h. des Mähdreschers, verschoben werden, so daß nunmehr das erste Vorsatzteil mittig vor dem Mähdrescher liegt und auf seinem Rücken das zweite Vorsatzteil um 180° geschwenkt trägt.

Durch diese Anordnung wird insbesondere eine einfache Verstelleinrichtung geschaffen und das Blickfeld des Fahrers wird nicht eingeschränkt, vor allen Dingen nicht in Richtung nach vorne auf die Straße, so daß der Fahrer des Mähdreschers noch eine gute Straßenübersicht unmittelbar vor seiner Maschine hat.

Ein Ausführungsbeispiel der Erfindung wird nachfolgend anhand der Zeichnungen erläutert. Die Zeichnungen zeigen dabei in

Fig. 1  schematisch einen Mähdrescher mit einsatzbereitem Erntevorsatz, in

Fig. 2  in Seitenansicht einen Mähdrescher mit Erntevorsatzteilen für den Straßentransport, in

Fig. 3  eine Ansicht von vorne auf die Anordnung nach Fig. 2, in

Fig. 4  eine Fig. 2 entsprechende Ansicht auf eine abgeänderte Ausführungsform, bei welcher die beiden Haspel ineinandergeschachtelt sind, in

Fig. 5  in zwei Stellungen eine abgeänderte Ausführungsform der Hebelanordnung für die Schwenkbewegung (auch in Seitenansicht) und in

Fig. 6  eine Anordnung, um die Haspel vor- und zurückzubewegen.

In den Zeichnungen ist ein Mähdrescher 1 dargestellt, der an seiner Vorderseite einen Erntevorsatz trägt, der aus den ersten und zweiten Vorsatzteilen A und B besteht. Die eigentlichen Vorsatzteile A und B sind dabei in üblicher Weise ausgebildet, so daß ihre nähere Darstellung und Erläuterung an dieser Stelle nicht erforderlich ist.

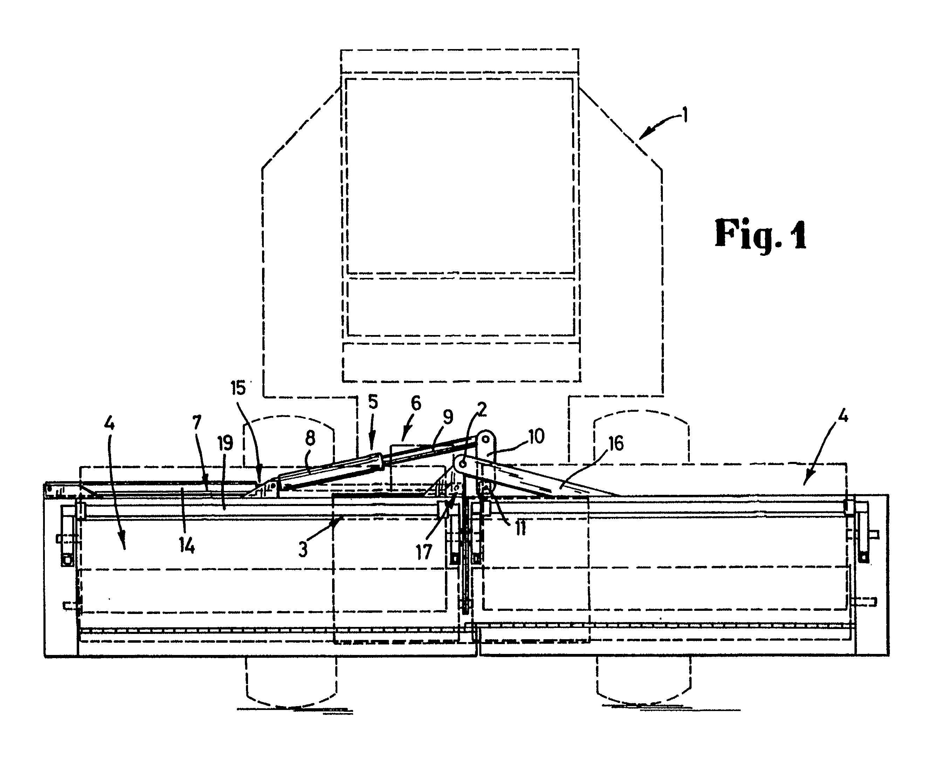

Bei dem dargestellten Ausführungsbeispiel gemäß Fig. 1 trägt das erste Vorsatzteil A eine Schwenkachse 2, an die ein Schwenkhebel 16 des zweiten Vorsatzteiles B angreift, der fest am zweiten Vorsatzteil B angeordnet ist, aber um die Schwenkachse 2 geschwenkt werden kann. Weiterhin trägt das erste Vorsatzteil A ein hydraulische Kolbenzylinderanordnung 5, deren Zylinder 8 schwenkbar am ersten Vorsatzteil A anschließt, während die Kolbenstange 9 an das zweite Vorsatzteil B anschließt, und zwar unter Zwischenschaltung einer Führungslasche 10, die bei 11 am zweiten Vorsatzteil B anschließt.

Hieraus ist erkennbar, daß bei einer Betätigung des Zylinders 8 die Kolbenstange 9 eingezogen werden kann, so daß dadurch die Führungslasche 10 geschwenkt wird, wobei sie dabei das zweite Vorsatzteil B mitnimmt, das sich unter Zwischenschaltung des Schwenkhebels 16 um die Schwenkachse 2 dreht. Zu Beginn der Schwenkbewegung stützt sich dabei die Führungslasche 10 an ihrer zur Schwenkachse 2 hin gerichteten Seite an der Schwenkachse 2 ab, die hierfür entsprechend ausgebildet ist.

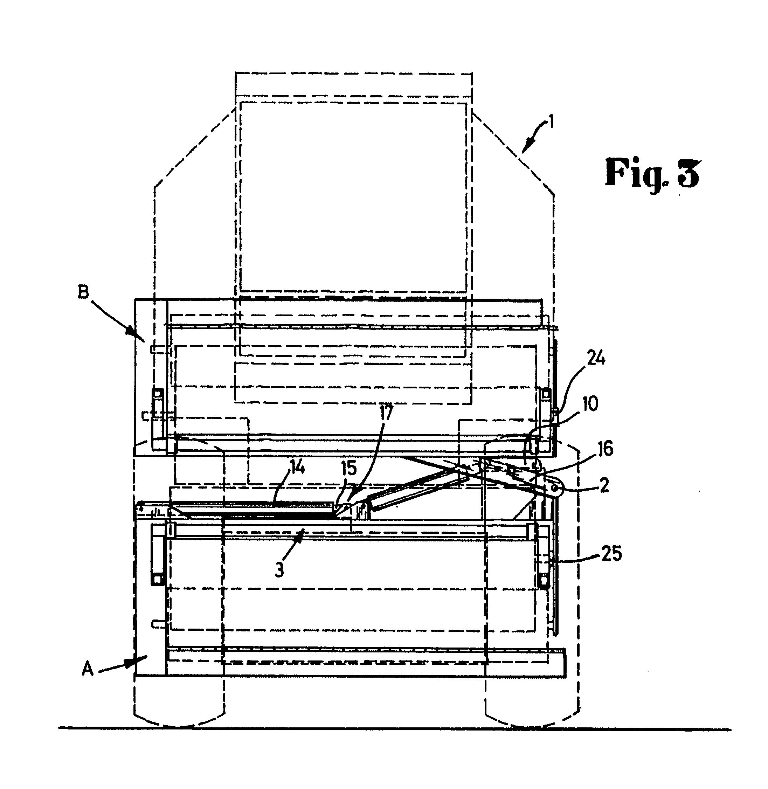

Hat sich das zweite Vorsatzteil B aus der in Fig. 1 dargestellten Stellung um die Schwenkachse 2 gedreht,

2

legt sich die Führungslasche 10 mit ihrer Rückseite auf ein Stützblech 6 auf, das vom ersten Vorsatzteil A getragen wird (Fig. 1 und 3).

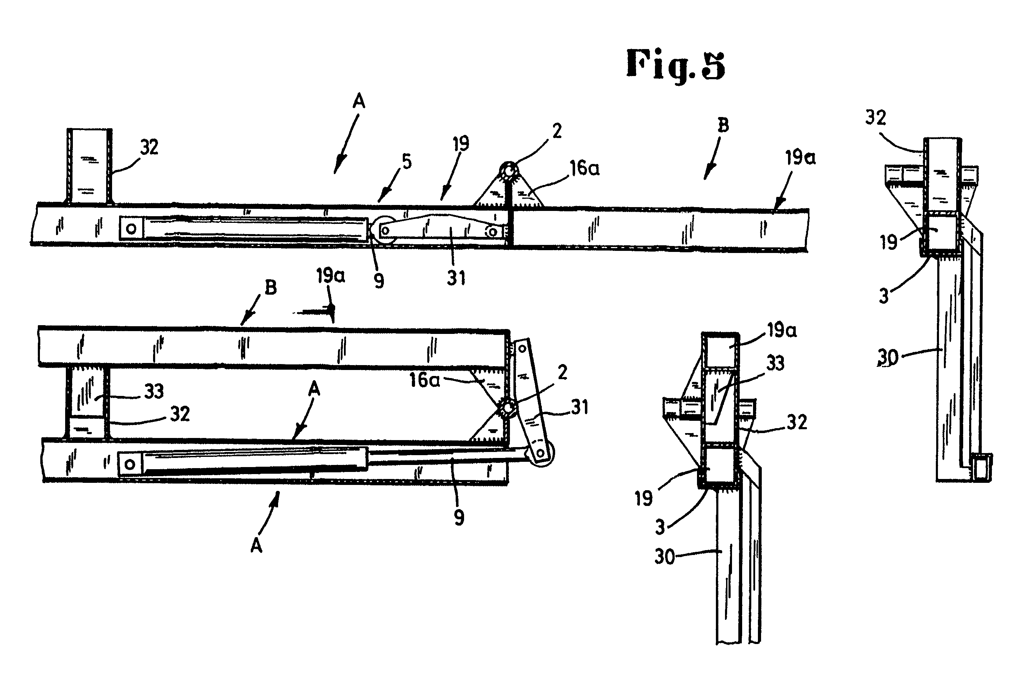

Bei der in Fig. 5 dargestellten Ausführungsform ist die Kolbenzylinderanordnung 5 in einen rohrförmigen Tragbalken 19 verlegt. Es ist erkennbar, daß an die Kolbenstange 9 gelenkig eine Gelenklasche 31 anschließt, die anderenendes gelenkig an einen rohrförmigen Tragbalken 19a des zweiten Vorsatzteiles B angeschlossen ist. Bei 16a ist der Schwenkhebel erkennbar, mit welchem das zweite Vorsatzteil B an die Schwenkachse 2 anschließt.

Aus der unteren Darstellung in Fig. 5 ist erkennbar, daß dann, wenn die Kolbenstange 9 ausgefahren ist, das zweite Vorsatzteil B um die Schwenkachse 2 geschwenkt ist und der Tragbalken 19a sich auf die Oberseite des Tragbalkens 19 des ersten Vorsatzteiles A auflegt. Hierbei ist zur sicheren und torsionsfreien Abstützung auf dem Tragbalken 19 ein Stützrohr 32 vorgesehen, in das ein Zentrierzapfen 33 eingreift, der an den Tragbalken 19a des zweiten Vorsatzteiles B fest angeordnet ist und der im wesentlichen formschlüssig in das Stützrohr eingreift.

Durch die Anordnung der Kolbenzylinderanordnung 5 in dem Tragbalken 19 des ersten Vorsatzteiles A wird die Sicht aus einer Kabine 22 des eigentlichen Mähdreschers 1 auf die Arbeitswerkzeuge verbessert.

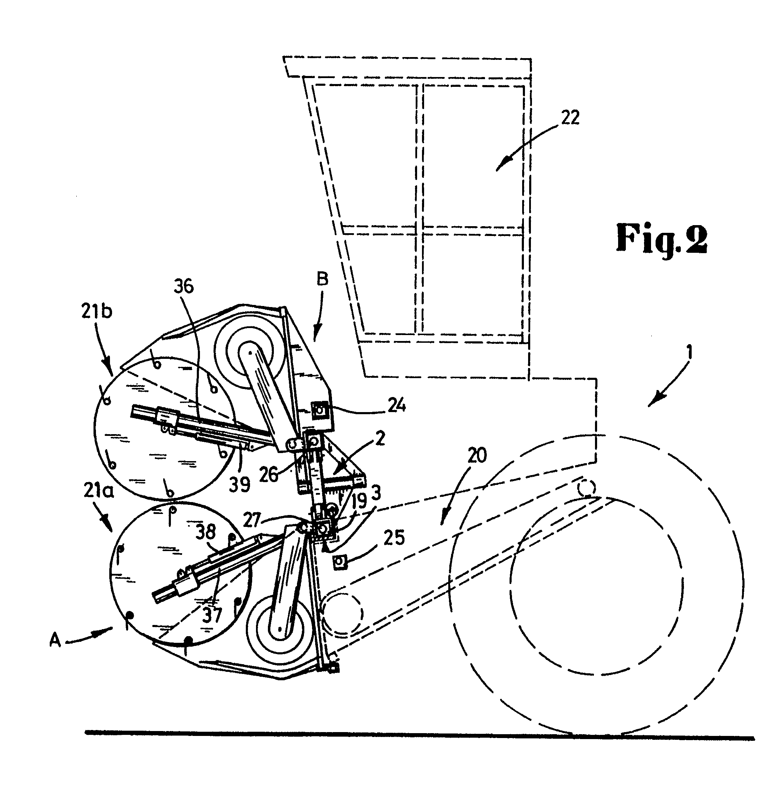

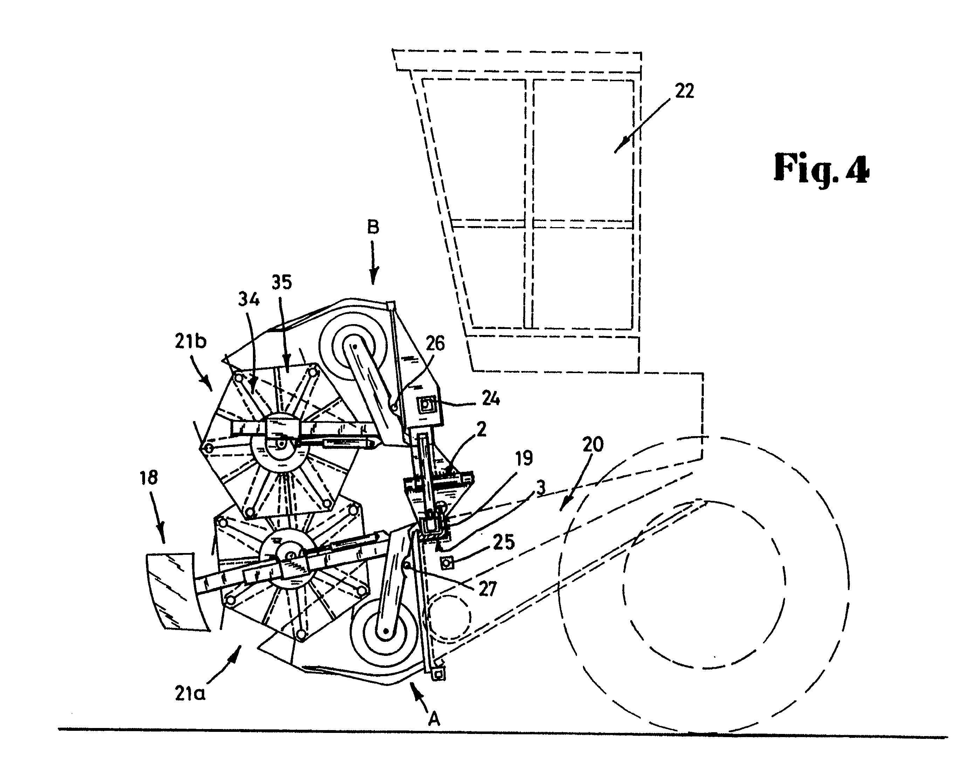

Bei der Anordnung gemäß Fig. 4 ist erkennbar, daß die beiden Haspel 21a und 21b an ihren stirnseitigen Speichen 34 einen aus gummielastischem Werkstoff bestehenden Schutzüberzug 35 tragen, wodurch es möglich wird, daß die beiden Haspel ineinander eingeschachtelt gelagert werden können, so daß der Raum, den die Haspel 21a und 21b im zusammengeklappten Zustand einnehmen, erheblich verringert wird. Im übrigen sind in Fig. 4 die gleichen Bezugszeichen wie in Fig. 2 eingesetzt.

Weiterhin ist das erste Vorsatzteil A gemäß Fig. 1 mit einer hydraulischen Kolbenzylinderanordnung 7 ausgerüstet, deren Zylinder 14 fest vom ersten Vorsatzteil A getragen wird, während die Kolbenstange 15 an einem Festpunkt des Mähdreschers 1 bzw. eines Grundrahmens 30 (Fig. 5) anschließt, so wie dies bei 17 dargestellt ist. So wird bei einer Betätigung des Zylinders 7 das erste Vorsatzteil A quer zum Mähdrescher 1 verschoben, und zwar so lange, bis die in der Zeichnung linke Seite des ersten Vorsatzteiles A etwa mit der in der Zeichnung linken Kante des Mähdreschers fluchtet. Dabei nimmt das erste Vorsatzteil A das von ihm getragene und um 180° gedrehte zweite Vorsatzteil B mit, so daß sich nunmehr beide Teile — wie dies in Fig. 3 erkennbar ist — etwa mittig vor dem Mähdrescher 1 befinden.

Aus Fig. 2 und Fig. 4 ist deutlicher die Schwenkachse 2 erkennbar, wobei schematisch angedeutet ist, daß im mittleren Teil dieser Schwenkachse 2 das erste Vorsatzteil A anschließt, während das zweite Vorsatzteil B beiderseits des ersten Vorsatzteiles A an die Schwenkachse 2 anschließt.

Weiterhin ist in Fig. 1 und 5 eine Gleitführung 3 erkennbar, in der sich das erste Vorsatzteil A mitt seinem entsprechenden Tragbalken 19 abstützt.

Aus Fig. 2 und Fig. 4 ist auch ein an sich bekannter Schrägförderkanal 20, die beiden Haspel 21a und 21b und die Kabine 22 des eigentlichen Mähdreschers 1 erkennbar.

Aus Fig. 2 und Fig. 4 ist schließlich ersichtlich, daß das zweite Vorsatzteil B und der Schrägförderkanal 20 je mit einem sogenannten Antriebstecker 24, 25 ausgerüstet ist, die bei Zurückschwenken des zweiten Vorsatzteiles B in die Arbeitsstellung miteinander in Kontakt kommen und dadurch eine Getriebeverbindung herstellen. In gleicher Weise können gemäß Fig. 2 in den Tragbalken 19 und 19a entsprechende Wellenkupplungen 26 und 27 vorgesehen sein, die beim Zurückklappen des zweiten Vorsatzteiles B aus der in Fig. 2 dargestellten Stellung in die in Fig. 1 dargestellte Stellung miteinander in Kontakt kommen und damit eine Verbindung herstellen. Gemäß der Ausführung entsprechend Fig. 4 sind die Wellenkupplungen 26 und 27 aus den Tragbalken 19 und 19a herausverlagert.

Vor dem zwischen den beiden Haspeln 21a und 21b gebildeten Spalt kann ein Kornteiler 18 angeordnet sein, der ein ungewolltes Eindringen des Erntegutes in diesen Spalt verhindert (Fig. 4).

Es ist allgemein bekannt, daß die Haspel 21a und 21b horizontal verstellt werden müssen. Hierfür ist aus Fig. 2 und 4 erkennbar, daß die Haspel in Haspelgabeln gelagert sind, von denen in Fig. 2 und 4 die Gabelteile 36 und 37 erkennbar sind. Diese Gabeln 36 und 37 tragen hydraulische Kolbenzylinderanordnungen 38 und 39, mit denen die Verschiebebewegung möglich wird. Es ist erkennbar, daß vier solcher hydraulischer Kolbenzylinderanordnungen vorgesehen werden müssen, um eine korrekte Verstellung der Haspel 21a und 21b in ihren Gabellagerungen zu erreichen.

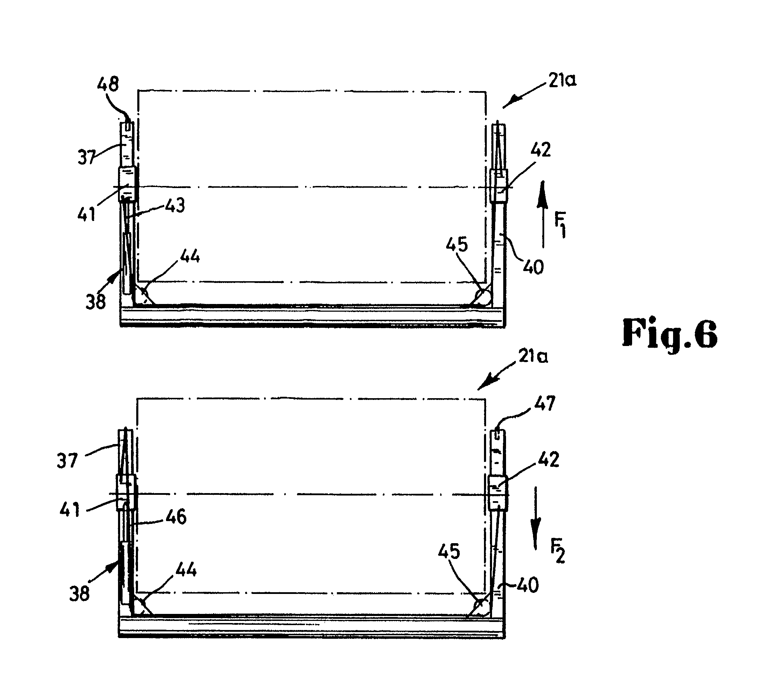

Um das Gewicht zu reduzieren und die Kosten zu verringern, wird in Fig. 6 eine andere Möglichkeit zur Horizontalverstellung der Haspel vorgeschlagen. Hierbei zeigt Fig. 6 die Haspel 21a und weiterhin ist die Haspelgabel 37 erkennbar. Die gegenüberliegende Gabel ist mit 40 bezeichnet. Die Gabel 37 trägt die Kolbenzylinderanordnung 38. Hierbei ist der Zylinder auf der Gabel 37 gelagert und die Kolbenstange greift mit ihrem freien Ende an eine Schiebehülse 41 an. Auf der Gabel 40 ist ebenfalls eine Schiebehülse 42 verschiebbar vorgesehen. Eine Seilführung 43 führt von der Schiebehülse 41 über Umlenkrollen 44 und 45 und eine Umlenkrolle 47 am vorderen Ende der Gabel 40 zur Schiebehülse 42 und eine zweite Seilführung 46 führt ebenfalls von der Schiebehülse 41, aber über eine Umlenkrolle 48 am vorderen Ende der Gabel 37 und dann über die Umlenkrollen 44 und 45 zur Schiebehülse 42. Um dies zu verdeutlichen, ist die Haspel mit ihrer Gabellagerung in Fig. 6 zweimal dargestellt und in der oberen Darstellung die Seilführung 43 und in der unteren Darstellung die Seilführung 46, wobei in Realität natürlich beide Seilführungen 43 und 46 an einem Haspel verwirklicht sind.

Soll die Haspel 21a nach vorne verschoben werden, wie dies der Pfeil $F_1$ in Fig. 6 verdeutlicht, bewirkt die Kolbenstange der Kolbenzylinderanordnung 38 ein Vorschieben der Schiebehülse 41 und die Seilführung 43 ein Vorziehen der Schiebehülse 42.

Soll die Haspel 21a zurückverstellt werden, wie dies durch den Pfeil $F_2$ in Fig. 6 verdeutlicht wird, bewirkt der Zug der Kolbenstange an der Schiebehülse 41 die Zurückbewegung und der Zug des Seilzuges 46 an der Schiebehülse 42 deren Zurückbewegung.

**Patentansprüche**

1. Kombination eines Mähdreschers (1) mit einem Mäh- und/oder Aufnahmevorsatz bestehend aus zwei beweglichen vom Mähdrescher (1) quer zur Mähdrescherlängsachse getragenen ersten und zweiten Vorsatzteilen (A, B), von denen ein Vorsatzteil um eine in Fahrtrichtung des Mähdreschers weisende Schwenkachse (2) schwenkbar ist, dadurch gekennzeichnet, daß das um die in Fahrtrichtung weisende Achse schwenkbare zweite Vorsatzteil (B) schwenkbar an dem ersten Vorsatzteil (A) gelagert und über das erste Vorsatzteil (A) legbar ist und daß das erste Vorsatzteil (A) quer zur Längsachse des Mähdreschers verschiebbar gelagert ist.

2. Vorrichtung nach Anspruch 1, dadurch gekennzeichnet, daß die Schwenkachse (2) oberhalb der ersten und zweiten Vorsatzteile (A, B) an diesen angeordnet ist, das erste Vorsatzteil (A) von einem vom Mähdrescher (1) getragenen Grundrahmen (30) verschiebbar getragen ist und das erste Vorsatzteil (A) die Mittel trägt, die anderenendes an das zweite Vorsatzteil (B) zur Durchführung von dessen Schwenkbewegung anschließen.

3. Vorrichtung nach Anspruch 1 oder 2, dadurch gekennzeichnet, daß das erste Vorsatzteil (A) eine hydraulische Kolbenzylinderanordnung (5) zur Durchführung der Schwenkbewegung des zweiten Vorsatzteiles (B) trägt.

4. Vorrichtung nach einem oder mehreren der Ansprüche 1 bis 3, dadurch gekennzeichnet, daß das erste Vorsatzteil (A) eine hydraulische Kolbenzylinderanordnung (7) einenendes trägt, die anderenendes an den Grundrahmen (30) (bei 17) anschließt.

5. Vorrichtung nach einem oder mehreren der vorhergehenden Ansprüche, dadurch gekennzeichnet, daß die hydraulische Kolbenzylinderanordnung (5) mit ihrem Zylinder (8) schwenkbar am ersten Vorsatzteil (A) anschließt, während die Kolbenstange (9) schwenkbar an das eine Ende einer Führungslasche (10) angreift, die ihrerseits schwenkbar bei (11) an dem zweiten Vorsatzteil (B) anschließt.

6. Vorrichtung nach einem oder mehreren der vorhergehenden Ansprüche, dadurch gekennzeichnet, daß im 180° geschwenkten Zustand des zweiten Vorsatzteiles (B) die Führungslasche (10) sich auf ein vom ersten Vorsatzteil (A) getragenes Stützblech (6) auflegt.

7. Vorrichtung nach einem oder mehreren der vorhergehenden Ansprüche, dadurch gekennzeichnet, daß auf einem Teil des Schwenkweges der Führungslasche (10) sich diese an der Schwenkachse (2) abstützt.

8. Vorrichtung nach Anspruch 1 bis 4, dadurch gekennzeichnet, daß die hydraulische Kolbenzylinderanordnung (5) innerhalb eines Tragbalkens (19) angeordnet ist und die Kolbenstange (9) an eine Gelenklasche (31) gelenkig anschließt, die anderenendes gelenkig an das zweite Vorsatzteil (B) anschließt.

9. Vorrichtung nach einem oder mehreren der vorhergehenden Ansprüche 1 bis 8, dadurch gekennzeichnet, daß der Tragbalken (19) des ersten Vorsatzteiles (A) ein Stützrohr (32) trägt und der Tragbalken (19a) des zweiten Vorsatzteiles (B) einen Zentrierzapfen (33), der im übereinandergeklappten Zustand der ersten und zweiten Vorsatzteile (A) und (B) in das oben offene Stützrohr (32) eingreift.

10. Vorrichtung nach einem oder mehreren der vorhergehenden Ansprüche, dadurch gekennzeichnet, daß der Zylinder (14) der hydraulischen Kolbenzylinderanordnung (7) vom ersten Vorsatzteil (A) getragen wird, während die Kolbenstange (15) der hydraulischen Kolbenzylinderanordnung (7) an dem Grundrahmen (30) anschließt.

11. Vorrichtung nach einem oder mehreren der vorhergehenden Ansprüche, gekennzeichnet durch einen den Spalt zwischen dem ersten Haspel (21a) und dem zweiten Haspel (21b) überbrückenden Kornteiler (18).

12. Vorrichtung nach einem oder mehreren der vorhergehenden Ansprüche, dadurch gekennzeichnet, daß die beiden Haspel (21a) und (21b) in je einer Gabellagerung gelagert sind und eine Gabel (37) eine hydraulische Kolbenzylinderanordnung (38) trägt und beide Gabeln mit Schiebehülsen (41, 42) ausgerüstet sind, wobei die Schiebehülsen durch einen doppelten Seilzug (43, 46) miteinander verbunden sind.

13. Vorrichtung nach einem oder mehreren der vorhergehenden Ansprüche, dadurch gekennzeichnet, daß

4

im übereinandergeklappten Zustand der erste und zweiten Haspel (21a) und (21b) diese ineinander einschachtelbar sind.

**Claims**

1. Combination of a combine harvester (1) with a cutting and/or pick-up attachment comprising two movable first and second attachment parts (A, B) which are carried by the combine harvester (1) transversely to the longitudinal axis of the combine harvester and of which one attachment part can be swivelled about a swivelling spindle (2) pointing in the direction of travel of the combine harvester, characterised in that the second attachment part (B) swivellable about the spindle pointing in the direction of travel is mounted swivellably on the first attachment part (A) and can be laid over the first attachment part (A) and in that the first attachment part (A) is mounted in such a way as to be displaceable transversely to the longitudinal axis of the combine harvester.

2. Apparatus according to Claim 1, characterised in that the swivelling spindle (2) is arranged above the first and second attachment parts (A, B), on the latter, the first attachment part (A) is carried in displaceable fashion by a base frame (30) carried by the combine harvester (1) and the first attachment part (A) carries the means which, at the other end, are connected to the second attachment part (B) for the purpose of carrying out the swivelling movement of the latter.

3. Apparatus according to Claim 1 or 2, characterised in that the first attachment part (A) carries a hydraulic piston-cylinder arrangement (5) for the purpose of carrying out the swivelling movement of the second attachment part (B).

4. Apparatus according to one or more of Claims 1 to 3, characterised in that, at one end, the first attachment part (A) carries a hydraulic piston-cylinder arrangement (7), which is connected at the other end to the base frame (30) (at 17).

5. Apparatus according to one or more of the preceding claims, characterised in that the hydraulic piston-cylinder arrangement (5) is connected swivellably to the first attachment part (A) by its cylinder (8), while the piston rod (9) engages swivellably on one end of a guide link (10) which, for its part, is connected swivellably at (11) to the second attachment part (B).

6. Apparatus according to one or more of the preceding claims, characterised in that, in the state in which the second attachment part (B) has been swivelled through 180°, the guide link (10) comes to rest on a supporting plate (6) carried by the first attachment part (A).

7. Apparatus according to one or more of the preceding claims, characterised in that, over part of the swivelling path of the guide link (10), the latter is supported against the swivelling spindle (2).

8. Apparatus according to Claim 1 to 4, characterised in that the hydraulic piston-cylinder arrangement (5) is arranged within a supporting beam (19) and the piston rod (9) is connected in articulated fashion to an articulated link (31) which is connected in articulated fashion at the other end to the second attachment part (B).

9. Apparatus according to one or more of preceding Claims 1 to 8, characterised in that the supporting beam (19) of the first attachment part (A) carries a supporting tube (32) and the supporting beam (19a) of the second attachment part (B) carries a centring spigot (33) which, in the state in which the first and second attachment parts (A) and (B) are folded one above the other, engages in the supporting tube (32), which is open at the top.

10. Apparatus according to one or more of the preceding claims, characterised in that the cylinder (14) of the hydraulic piston-cylinder arrangement (7) is carried by the first attachment part (A) while the piston rod (15) of the hydraulic piston-cylinder arrangement (7) is connected to the base frame (30).

11. Apparatus according to one or more of the preceding claims, characterised by a divider (18) bridging the gap between the first reel (21a) and the second reel (21b).

12. Apparatus according to one or more of the preceding claims, characterised in that the two reels (21a) and (21b) are each mounted in a forked mounting and one fork (37) carries a hydraulic piston-cylinder arrangement (38) and both forks are equipped with sliding sleeves (41, 42), the sliding sleeves being connected to one another by a double cable control (43, 46).

13. Apparatus according to one or more of the preceding claims, characterised in that, in the state in which the first and second reels (21a) and (21b) are folded one above the other, the said reels can be nested in one another.

**Revendications**

1. Combinaison d'une moissonneuse-batteuse (1) avec un tablier se composant d'une première et d'une seconde parties de tablier mobiles (A, B), portées par la moissonneuse-batteuse (1) perpendiculairement à l'axe longitudinal de celle-ci, une partie de tablier (B) étant basculante autour d'un axe de pivotement (2) orienté dans le sens de la marche de la moissonneuse-batteuse, caractérisée en ce que ladite seconde partie de tablier (B) est supportée de manière basculante sur la première partie de tablier (A) et peut être disposée par-dessus celle-ci et en ce que la première partie de tablier (A) est supportée de manière coulissante perpendiculairement à l'axe longitudinal de la moissonneuse-batteuse.

2. Mécanisme selon la revendication 1, caractérisé en ce que l'axe de pivotement (2) est disposé au-dessus de la première et de la seconde parties de tablier (A, B), en ce que la première partie de tablier (A) est portée de manière coulissante par un bâti (30) porté par la moissonneuse-batteuse (1) et en ce que la première partie de tablier (A) porte des moyens qui se raccordent à l'autre extrémité sur la seconde partie de tablier (B) pour l'exécution de son mouvement de basculement.

3. Mécanisme selon l'une des revendications 1 ou 2, caractérisé en ce que la première partie de tablier (A) porte un dispositif à piston et cylindre hydraulique ou vérin (5) pour l'exécution du mouvement de basculement de la seconde partie de tablier (B).

4. Mécanisme selon l'une des revendications 1 à 3, caractérisé en ce que la première partie de tablier (A) porte à une extrémité un dispositif à piston et cylindre hydraulique ou vérin (7), qui se raccorde (en 17) à l'autre extrémité au bâti (30).

5. Mécanisme selon l'une des revendications précédentes, caractérisé en ce que le cylindre (8) du vérin (5) est articulé sur la première partie de tablier (A), et sa tige (9) est articulée sur l'une des extrémités d'une biellette de guidage (10) qui est elle-même articulée en (11) sur la seconde partie de tablier (B).

6. Mécanisme selon l'une des revendications précédentes, caractérisé en ce que dans la position basculée à 180° de la seconde partie de tablier (B) la biellette de guidage (10) repose sur une tôle d'appui (6) portée par la première partie de tablier (A).

7. Mécanisme selon l'une des revendications précédentes, caractérisé en ce que sur une partie du trajet de basculement de la biellette de guidage (10), celle-ci repose sur l'axe de pivotement (2).

8. Mécanisme selon l'une des revendications 1 à 4, caractérisé en ce que le vérin (5) est disposé à l'intérieur d'une poutrelle (19) et en ce que sa tige (9) est articulée à une biellette (31), dont l'autre extrémité est articulée sur la seconde partie de tablier (B).

9. Mécanisme selon l'une des revendications 1 à 8, caractérisé en ce que la poutrelle (19) de la première partie de tablier (A) porte un tube d'appui (32) et en ce que la poutrelle (19a) de la seconde partie de tablier (B) porte un goujon de centrage (33) qui, à l'état rabattu de la première partie de tablier (A) sur la seconde partie de tablier (B), s'insère dans le tube d'appui (32) qui est ouvert vers le haut.

10. Mécanisme selon l'une des revendications précédentes, caractérisé en ce que le cylindre (14) du vérin (5) est porté par la première partie de tablier (A), et sa tige (15) se raccorde au bâti (30).

11. Mécanisme selon l'une des revendications précédentes, caractérisé en ce qu'il comporte un diviseur de grain (18) monté dans l'intervalle séparant un premier rabatteur (21a) et un second rabatteur (21b).

12. Mécanisme selon l'une des revendications précédentes, caractérisé en ce que les deux rabatteurs (21a) et (21b) sont supportés chacun par un support à fourche dont les fourches (37) portent chacune un vérin (38), lesdites fourches étant munies de manchons coulissants (41, 42), reliés entre eux par un double câble de traction (43, 46).

13. Mécanisme selon l'une des revendications précédentes, caractérisé en ce qu'à l'état rabattu, le premier rabatteur (21a) et le second rabatteur (21b) s'emboîtent l'un dans l'autre.

**Fig. 1**

EP 0 326 836 B1

**Fig.2**

EP 0 326 836 B1

Fig. 3

EP 0 326 836 B1

Fig. 4

# Fig.5

EP 0 326 836 B1

Fig.6